# EUROPEAN PATENT SPECIFICATION

(11) **EP 2 609 004 B1**
(45) Date of publication and mention of the grant of the patent: **15.04.2015**
(21) Application number: 11738062.6
(22) Date of filing: 13.07.2011
(51) Int. Cl.: B63B 27/25, B63B 35/00, B63B 35/30, E02F 7/02, E02F 7/04, E02F 7/06, E02B 3/18, E02F 9/06, E02B 15/10, E02D 15/10

(54) **METHOD FOR RECLAIMING LAND**
VERFAHREN ZUR LANDURBARMACHUNG
MÉTHODE DE DÉFRICHEMENT DE TERRAIN

(30) Priority: 25.08.2010 NL 2005268
(43) Date of publication of application: 03.07.2013
(73) Proprietor: Baggermaatschappij Boskalis B.V., 3356 LK Papendrecht (NL)
(72) Inventor: VAN TUIJL, Cornelis Wouter, NL-2973 XD Molenaarsgraaf (NL); EIJGENRAAM, Johannes Alexander, NL-2635 LB Den Hoorn (NL)
(74) Representative: Geurts, Franciscus Antonius
(86) International application number: PCT/NL2011/050507
(87) International publication number: WO 2012/026808

(56) References cited:
- EP-A1- 0 158 385
- WO-A2-2010/104404
- JP-A- 2001 040 638
- US-A- 4 030 435

## Description

### BACKGROUND OF THE INVENTION

The invention relates to a method for reclaiming land.

JP 2001,040,638 discloses a method for reclaiming land by means of a dredger, for instance a trailing suction hopper dredger, reclaiming dredged material from a submarine seabed at a first location, wherein the reclaimed dredged material is stored in a cargo hold in the dredger. The dredged material is transported by the dredger to a second location that is situated some distance away from the first location. The dredger is provided with a pump with which the dredged material is pumped out of the cargo hold. Subsequently the dredged material is distributed from the dredger over a location of land reclamation.

It is an object of the invention to improve on the method for reclaiming land.

The invention further relates to a transport vessel for reclaiming land. A transport vessel according to the preamble of claim 10 is known from US 4,030,435.

### SUMMARY OF THE INVENTION

According to a first aspect the invention provides a method for reclaiming land at a location of land reclamation using a supply vessel, a transport vessel and a delivery vessel, wherein the transport vessel is provided with a hull and at least a hopper situated within the hull for containing dredged material, wherein the at least one hopper is provided with a chute extending through the bottom of the hull, wherein the transport vessel is provided with a valve assembly having a movable valve, wherein in a first position the valve closes off the chute and in a second position it at least partially ends the closure of the chute as a result of which the hopper is in fluid connection with the water in which the transport vessel is floating, wherein the method comprises by means of the supply vessel reclaiming dredged material from a submarine seabed, from the supply vessel transferring the dredged material to the at least one hopper of the transport vessel, by means of the transport vessel transporting the dredged material stored in the hopper to a location of land reclamation situated further away, wherein at the location of land reclamation the transport vessel is placed over a part of the seabed that is designated or adapted to be a depot, bringing the valve from the first position into the second position for via the chute dumping the dredged material in the depot, by means of the delivery vessel reclaiming the dumped dredged material from the submarine depot and transporting the dredged material therewith to the land to be reclaimed. Dumping dredged material via the chute in the bottom of the transport vessel may result in gaining time.

In one embodiment the transport vessel is provided with a supporting structure placed over or in the hopper, wherein the valve assembly is connected to the supporting structure, wherein the valve assembly comprises a valve stem extending from the supporting structure through the hopper, wherein the movable valve is arranged at the outer end of the valve stem. The movable valve can be controlled from the upper side of the hopper.

In one embodiment the hopper or the collective hoppers of the transport vessel have a capacity of at least fifty thousand cubic metres. In that way an advantageous ratio between the transportation costs and delivered quantity of dredged material can be realised.

In one embodiment the supply vessel is provided with a loading space for dredged material, wherein the loading space of the supply vessel is two to eight times smaller than the hopper or the collective hoppers of the transport vessel. In that way an advantageous ratio between transportation costs and the delivered quantity of the dredged material can be realised.

In one embodiment the supply vessel is provided with a loading space for dredged material, wherein the method comprises filling the loading space of the supply vessel with dredged material and by means of the supply vessel transporting the dredged material stored in the loading space to the location of land reclamation that is situated further away. As the supply vessel contributes to the transportation process with its own quantity of stored dredged material, a larger quantity of dredged material can be delivered at the location of land reclamation in comparison with the method in which only the transport vessel sails to the location of land reclamation.

In one embodiment the method comprises during the transfer of the dredged material from the supply vessel to the transport vessel having the supply vessel and the transport vessel sail together at a mutual intermediate distance that remains substantially the same. By sailing together the dredged material can be pumped directly from the supply vessel to the transport vessel, without it first having to be stored in the cargo hold of the supply vessel.

In one embodiment the valve stem is provided with a circumferential wall and outwardly oriented nozzles distributed all around the circumferential wall, wherein the transport vessel is provided with a water pump and a water distribution pipe assembly, wherein the water distribution pipe assembly is in fluid connection with the nozzles, wherein the method comprises pumping water through the water distribution pipe assembly using the water pump and spraying water through the nozzles into the hopper. The dredged material present in the hopper can be fluidised with the water. As a result the fluidised dredged material can be discharged more easily through the chute out of the hopper. The unloading time of a fully filled hopper can thus be reduced by at least 50%.

In one embodiment the valve stem is hollow, wherein the water distribution pipe assembly is in fluid connection with the nozzles via the hollow valve stem. The water can be pumped from the water distribution pipe assembly via the hollow valve stem from within through the nozzles. The water pipes thus can be less prone to wear by the dredged material present in the hopper.

In one embodiment the valve stem is provided with spouts that are curved downwards in the direction of the valve, wherein at their outer ends the spouts are provided with at least a few of the nozzles that are oriented downwards in the direction of the valve, wherein the method comprises spraying water through the nozzles at the outer ends of the spouts in the direction of the valve. As a result the fluidised dredged material can be discharged more easily through the chute out of the hopper. The unloading time of a fully filled hopper can thus be considerably reduced.

According to a second aspect the invention provides a transport vessel for transporting dredged material reclaimed from a seabed, wherein the transport vessel is provided with a hull and a hopper situated within the hull for containing dredged material, wherein the hopper is provided with a chute extending through the bottom of the hopper and the bottom of the hull, wherein the transport vessel is provided with a supporting structure placed over or in the hopper and a valve assembly connected to the supporting structure, wherein the valve assembly comprises a valve stem extending from the supporting structure through the hopper and a valve placed at the outer end of the valve stem, wherein in a first position the valve closes off the chute and in a second position it at least partially ends the closure of the chute as a result of which the hopper is in fluid connection with the water in which the transport vessel is floating, wherein the valve stem is provided with a circumferential wall and outwardly oriented nozzles distributed all around the circumferential wall, wherein the transport vessel is provided with a water pump and a water distribution pipe assembly, wherein the water distribution pipe assembly is in fluid connection with the nozzles. The water sprayed from the nozzles can be used for fluidising the dredged material present in the hopper. As a result the fluidised dredged material can be discharged more easily through the chute out of the hopper. The unloading time of a fully filled hopper can thus be reduced by at least 50%.

In one embodiment the valve stem is hollow, wherein the water distribution pipe assembly is in fluid connection with the nozzles via the hollow valve stem. The water can be pumped from the water distribution pipe assembly via the hollow valve stem from within through the nozzles. The water pipes can thus be less prone to wear by the dredged material present in the hopper.

In one embodiment the valve stem is provided with spouts curved downwards in the direction of the valve, wherein at their outer ends the spouts are provided with at least a few of the nozzles that are oriented downwards in the direction of the valve. The water sprayed from the nozzles at the outer end of the spouts can be used to fluidise dredged material present near or on the valve. As a result the fluidised dredged material can be discharged more easily through the chute out of the hopper. The unloading time of a fully filled hopper can thus be considerably reduced.

In one embodiment the transport vessel is provided with two adjacent rows of per row at least four consecutive hoppers, wherein the consecutive hoppers are separated from one another by walls, wherein the walls are provided with overflow openings. The dredged material can be distributed over or be unloaded from the multiple hoppers in a controlled manner. The water passed along with the dredged material is able to flow through the overflow openings and spread evenly over the hoppers.

In one embodiment the transport vessel is provided with at least an overflow placed in the hopper, for extracting water that was passed along with the dredged material. The overflow dumps the water out of the hopper overboard.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a side view of a transport vessel to be used in a method according to the invention;
Figure 2A shows a detail of the transport vessel according to figure 1;
Figure 2B shows a cross-section of the transport vessel according to the line II-B in figure 2A;
Figure 2C shows a cross-section of the transport vessel according to the line II-C in figure 2A;
Figure 3 shows a top view of the transport vessel according to figure 1;
Figures 4A-G show schematic views of the steps of a method for reclaiming dredged material using the transport vessel according to figure 1.

### DETAILED DESCRIPTION OF THE DRAWINGS

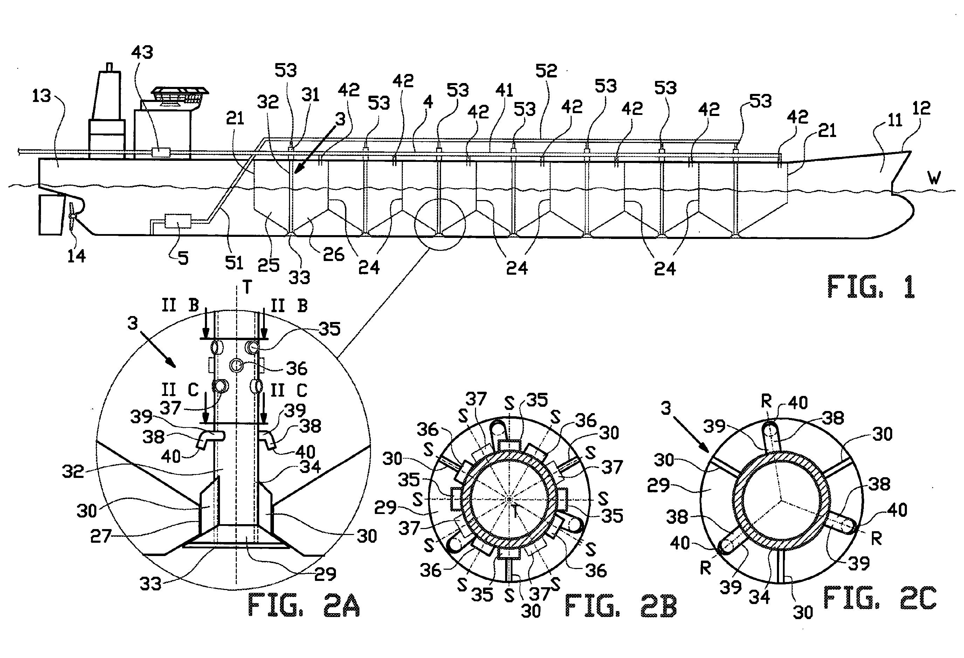

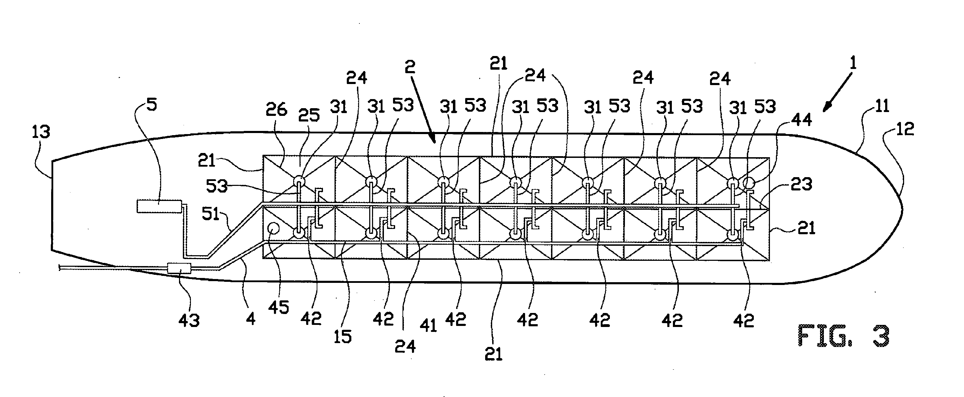

Figures 1 and 3 show a transport vessel 1 for transporting dredged material. The transport vessel 1 comprises a floating single-walled hull 11, which is partially situated below the waterline W and which is provided with a bow 12 and a stern 13. The transport vessel 1 comprises a propelling screw 14 placed near the stern 13 on the hull 11 and a cargo hold 2 situated within the hull 11, between the bow 12 and the stern 13.

The cargo hold 2 comprises a circumferential vertical outer wall 21 which bounds a loading space for containing dredged material. The circumferential vertical outer wall 21 considered in its circumferential direction is spaced apart all around from the wall of the hull 11. The cargo hold 2 is provided with a vertical partition 23 dividing the loading space in the longitudinal direction into two equal elongated sub spaces, and six transverse walls 24 placed transverse to the partition 23, which walls 24 on both sides of the partition 23 extend to the outer wall 21 of the hoppers 25. The transverse walls 24 are at mutual distance from one another and divide the loading space into two rows of seven hoppers 25, that means an overall number of fourteen hoppers 25. The transverse walls 24 are provided with small overflow openings that are not shown for allowing the water present in the dredged material to pass through between consecutive hoppers 25.

At its lower side each hopper 25 is provided with a funnel-shaped bottom wall 26 converging in the direction of the bottom of the hull 11. In this embodiment the funnel-shaped bottom wall 26 has the shape of a pyramid having a square base plane, wherein the apex of the pyramid points down. In the apex of the funnel-shaped bottom wall 26 the hopper 25 merges into a circular chute 27 which extends through the bottom wall of the hull 11.

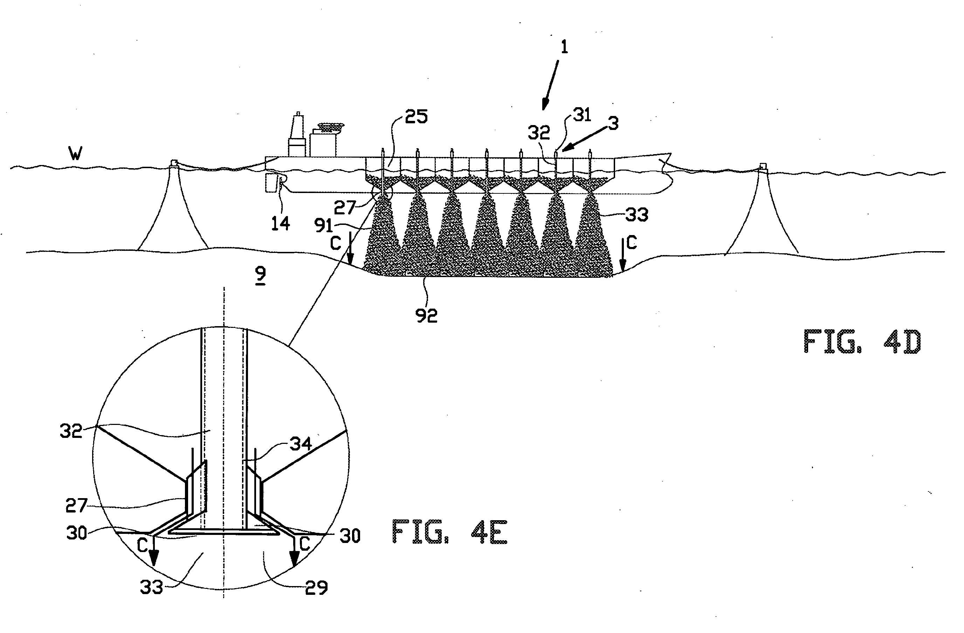

As shown in figure 1, the transport vessel 1 is provided with a frame placed over the cargo hold 2 and per hopper 25 a valve assembly 3 suspended below the frame. Each valve assembly 3 comprises a valve drive 31 attached to the frame and an elongated, hollow valve stem 32 connected to the valve drive 31. The valve stem 32 extends from the valve drive 31, through the centre of the respective hopper 25 and the chute 27. As shown in detail in figure 2A, at the outer end of the valve stem 32, at the lower side of the chute 27, the valve assembly 3 is provided with a non-return valve 33 which is situated at the lower side of the chute 27. The valve 33 is provided with a truncated conical portion 29 and three guide walls 30 above the truncated conical portion 29 and distributed all around the circumference of the valve 33. In the closed position of the valve 33 the guide walls 30 of the valve 33 abut the inner wall of the chute 27, and thus position the valve 33 within the chute 27. The truncated conical portion 29 is situated in a sunken recess in the chute 27 and closes off the chute 27 against a circumferential sealing. As shown in figure 4E the guide walls 30 of the valve 33 in the opened condition of the valve 33 abut the circumferential wall of the chute 27. The valve 33 has then been moved downwards within the chute 27, wherein the opening in the chute 27 is cleared. The dredged material accommodated in the hopper 25 can flow out of the hopper 25 along and between the guide walls 30 into dumping direction C through the chute 27 into the water surrounding the transport vessel 1.

As the valve 33 is recessed into the chute 27, it is able to move downwards within the chute 27 and clear the chute 27 without the valve 33 protruding from under the bottom of the transport vessel 1. As a result the transport vessel 1 can dump over a very shallow seabed.

As can be seen in figures 2A and 2B, the valve stem 32 of the valve assembly 3 is provided with a cylindrical circumferential wall 34, a first group of four outwardly oriented first primary nozzles 35 that are distributed all around the circumferential wall 34, a second group of four outwardly oriented second primary nozzles 36 that are distributed all around the circumferential wall 34 and a third group of four outwardly oriented third primary nozzles 37 that are distributed all around the circumferential wall 34. The centre lines S of the in total twelve outwardly oriented first, second and third primary nozzles 35-37 extend radially in planes perpendicular to the centre line T of the circumferential wall 34. The three groups of first, second and third primary nozzles 35-37, considered in the direction of the centre line T, are spaced apart one below the other. The four first, second and third primary nozzles 35-37 per group are mutually evenly distributed all around over the entire circumference as a result of which the centre lines S are at an angle of ninety degrees to each other. With respect to each other the groups 35-37 are staggered in circumferential direction at an angle of thirty degrees. As result the in total twelve primary nozzles 35-37 of the three groups 35-37, considered in the direction of centre line T, together are evenly distributed all around over the full circumference of the circumferential wall 34.

As shown in figures 2A and 2C, the valve stem 32 is furthermore provided with a group of three spouts 38 distributed all around the circumferential wall 34, which group, considered in the direction of the centre line T, is spaced apart below the lowermost third group of third primary nozzles 37. The centre lines R of the three spouts 38 extend in a plane perpendicular to the centre line T of the circumferential wall 34. The three spouts 38 are mutually evenly distributed all around over the full circumference, as a result of which the centre lines R are at an angle of one hundred and twenty degrees to each other. The spouts 38 comprise an outwardly oriented first spout portion 39 and a downwardly curved second spout portion 40. At its free outer end, the second spout portion 40 is provided with a secondary nozzle that is oriented downwardly inclined in the direction of the valve 33 at the outer end of the valve stem 32.

As shown in figure 3, the transport vessel 1 is provided with a first distribution pipe assembly 4, comprising a first main pipe 41 extending in the longitudinal direction of the transport vessel 1 and supported by the frame. The first distribution pipe assembly 4, per hopper 25 is provided with a first branch pipe 42 branching off the main pipe 41, which branch pipe, from the frame, with its free outer end is freely suspended over the respective hopper 25. At one outer end of the first main pipe 41, the first distribution pipe assembly 4 is provided with a coupling 43.

The transport vessel 1 is furthermore provided with a first overflow device 44 at the outer end of the cargo hold 2 that is situated near the bow 12 of the hull 11, and a second overflow device 45 at the outer end of the cargo hold 2 that is situated near the stern 13 of the hull 11.

The transport vessel 1 comprises a pump device 5 arranged in the hull 11 and a second distribution pipe assembly 51 connected to the pump device 5. The second distribution pipe assembly 51 comprises a second main pipe 52 supported by the frame and extending in the longitudinal direction of the transport vessel 1. The second distribution pipe assembly 51, per hopper 25 is provided with a first branch pipe 53 branching off the second main pipe 52, which branch pipe with its outer end that faces away from the second main pipe 52 is in fluid connection with hollow circumferential wall 34 of the valve stem 32 of the valve assembly 3 in the respective hopper 25.

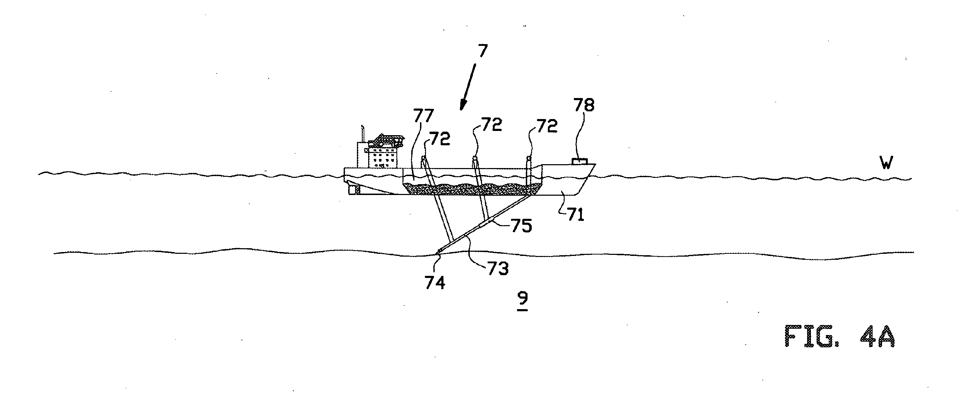

Figure 4A shows a supply vessel, in this example a trailing suction hopper dredger 7. The supply vessel can also be a sand dredger, a cutter suction dredger or another suitable, floating supply device. The trailing suction hopper dredger 7 is situated at a first location over a seabed 9. The trailing suction hopper dredger 7 is provided with a hull 71, a loading space 77 situated within the hull 71, three A-frames 72 placed on the hull 71 and a suction pipe section 73 suspended from the A-frames 72, from the hull 71. At its outer end the suction pipe section 73 is provided with a trailing suction head 74 which trails over the seabed 9 and a first pump 75 halfway the suction pipe section 73. The suction pipe section 73 is adapted for via the suction head 74 sucking in dredged material 91 from the seabed 9 and pumping the dredged material 91 through the suction pipe section 73 to the loading space 77. The trailing suction hopper dredger 7 is provided with a second pump 78 placed on the bow of the hull 71.

The hoppers 25 of the transport vessel 1 collectively have a capacity of approximately fifty thousand cubic metres. This is approximately two to eight times the capacity of the loading space 77 of the trailing suction hopper dredger 7 shown in figure 4A.

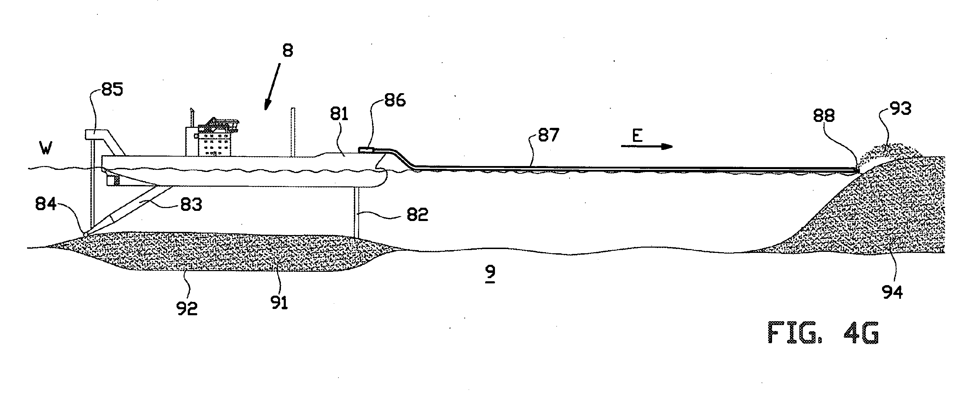

Figure 4G shows a delivery vessel, in this example a cutter suction dredger 8. The delivery vessel can also be sand dredger, a trailing suction hopper dredger or another suitable floating delivery vessel. The cutter suction dredger 8 is provided with a hull 81, a spud 82 extending below the hull 81 in the direction of the seabed 9, an A-frame 85 placed on the hull 81 and a cutter suction section 83 suspended from the A-frame 85 from the hull 81. At its outer end the cutter suction section 83 is provided with a cutter suction head 84 that dislodges dredged material 91. The cutter suction dredger 8 is provided with a schematically shown pump 86 and a floating reclamation pipe 87 connected to the pump 86. At the free outer end of the reclamation pipe 87 an upwardly oriented nozzle 88 is arranged.

Figures 4A-G show the method for reclaiming dredged material, transporting and hydraulically depositing it at a location of land reclamation.

Figure 4A shows the situation in which the trailing suction hopper dredger 7 trails the trailing suction head 74 over the seabed 9 at a first location. During trailing over the seabed 9, the trailing suction head 74 locally dislodges the seabed 9 and the released dredged material is sucked up via the suction pipe section 73 by the first pump 75 and transported to the loading space 77 of the trailing suction hopper dredger 7. The water that is passed along with the dredged material 91 during the stay in the loading space 77 of the trailing suction hopper dredger 7 is extracted from the dredged material 91, as a result of which also a fine fraction of the dredged material 91 is discharged via the extracted water. What remains in the loading space 77 of the trailing suction hopper dredger 7 is the dredged material 91 excluding the finer fraction.

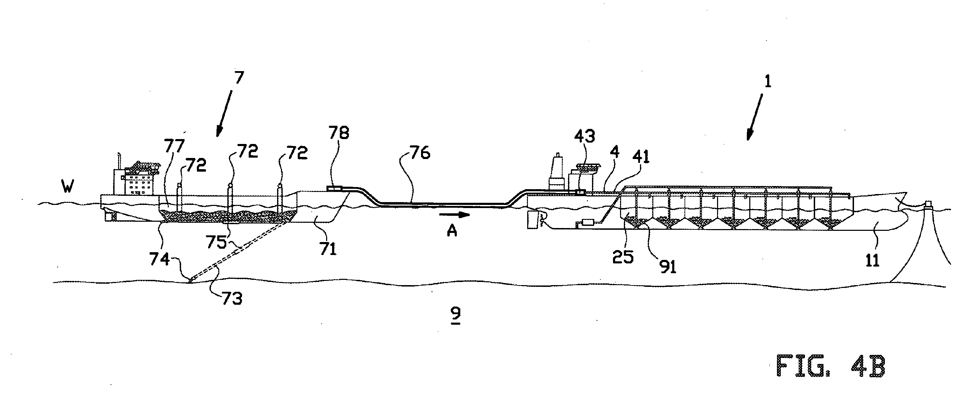

In figure 4B the situation is shown in which the trailing suction hopper dredger 7, as described above, is coupled to the coupling 43 on the transport vessel 1 by means of a transfer pumping pipe 76 floating on the waterline W and connected the second pump 78. The stored dredged material 91 is fluidised and from the loading space 77 pumped over in direction A to the transport vessel 1.

The dredged material 91 sucked up by the trailing suction hopper dredger 7 may in an alternative method be pumped over directly in direction A from the suction pipe section 73, shown in dots in figure 4B in the lowered position, to the transport vessel 1. During pumping over via the transfer pumping pipe 76 both vessels 1, 7 can sit still, but they may also sail together at the same speed and at an intermediate distance that remains the same.

The dredged material 91 is distributed over the hoppers 25 via the first distribution pipe assembly 4. In figure 4B the hoppers 25 have already been partially filled with dredged material 91. The trailing suction hopper dredger 7 will repeat the method described above several times in order to completely fill the hoppers 25 of the transport vessel 7. During receipt of the dredged material 91 in the hoppers 25, the water passed along with the dredged material 91 will spread over the adjacent hoppers 25 via the overflow openings in the transverse walls 24. Finally the excess of water can be extracted from the dredged material 91 via the first overflow device 44 and the second overflow device 45. Optionally a fine fraction of the dredged material 91 can be discharged again via the extracted water. What remains in the hoppers 25 is the dredged material 91 excluding the finer fraction.

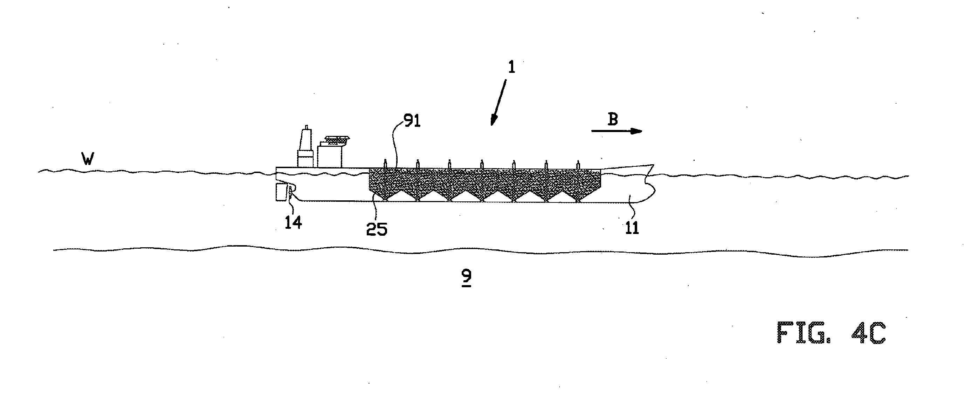

In figure 4C the situation is shown in which the hoppers 25 of the transport vessel 1 have nearly been filled with dredged material 91. The propelling screw 14 of the transport vessel 1 is actuated. The transport vessel 1 has moved in sailing direction B and will continue its journey in the direction of sailing direction B until a second location is reached.

Figure 4D shows the situation in which the transport vessel 1 has arrived at the second location. The second location is situated at a distance from the first location, for instance at a distance of five hundred kilometres or more. The second location comprises a part of the seabed 91 designated to be dumping depot 92. The transport vessel 1 is anchored straight over said dumping depot 92. The valve drive 31 of the valve assemblies 3 have been actuated, as a result of which the valves 33 connected to the valve stems 32 have been moved downwards. As shown in figure 4E the chutes 27 of the hoppers 25 have been cleared because of this, as a result of which the dredged material 91 stored in the hoppers 25 flows out of the hoppers 25 in dumping direction C due to gravity.

The dredged material 91 flowing out of the hoppers 25 due to gravity can be enhanced by fluidising the dredged material 91 again. For that purpose the pump 5 shown in figure 1 is actuated, which then pumps water from out of the water surrounding the transport vessel 1. The water is distributed while pressurised by the second distribution pipe assembly 51. The distribution pipe assembly 51 is connected to the hollow valve stems 32 of the valve assemblies 3 via the second branch pipes 52. Subsequently the pressurised water is sprayed into the respective hoppers 25 via the first, second, third primary nozzles 35-37 and the secondary nozzles of the spouts 38 from the valve stem 32 placed in the centre of the hopper 25. The first, second and third primary nozzles 35-37 provide a jet of water having a substantially horizontal initial direction. The secondary nozzles at the spouts 38 provide a jet of water having an initial direction that is oriented downwardly inclined in the direction of the valve 33, in order to fluidise the dredged material 91 near the valve 33 and push it through the chute 27 in a directed manner. Unloading all the dredged material 91 from the completely filled hoppers 25 in this way, runs considerably faster than unloading the dredged material 91 due to gravity. The unloading time can be reduced by at least 50%.

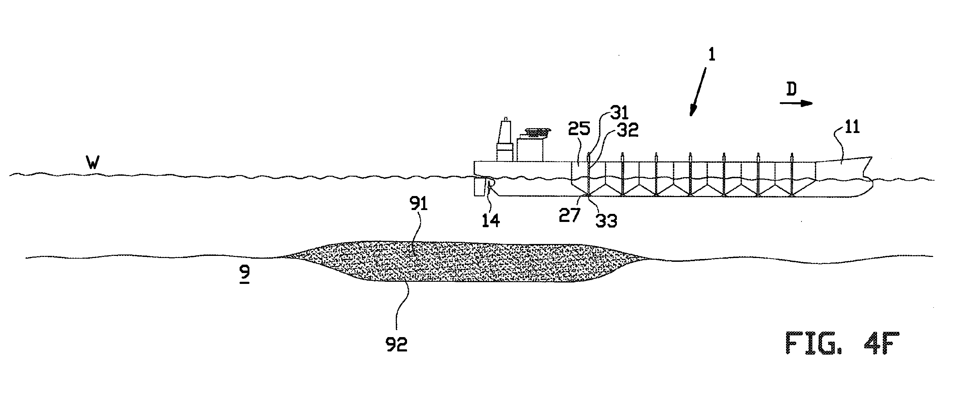

In figure 4F the situation is shown in which the transport vessel 1 has unloaded all dredged material 91 present in the hoppers 25 over the sand depot 92. The valve drives 31 have been actuated and have moved the valve stems 32 with the valves 33 connected thereto upwards. The valves 33 have closed off the chutes 27 in the bottom side of the hull 11. During unloading water might have ended up in the hoppers 25 counter the outflow of dredged material 91. The space around the circumferential outer wall 21, as shown in figure 3, however offers sufficient buoyancy to leave the transport vessel afloat. The propelling screw 14 of the transport vessel 1 is actuated. The transport vessel 1 has moved in sailing direction D and will return to the first position as described in figure 4A, after which the steps set out above can be repeated.

Figure 4G shows the situation in which the cutter suction dredger 8 is situated at the second location over the part of the seabed 9 designated to be sand depot 92. The cutter suction head 84 is actuated and dislodges the dredged material 91 in the sand depot 92. The cutter suction section 83 sucks up the released dredged material to the surface. The dredged material 91 sucked up by the cutter suction section 83 is pumped via the pump 86, through the reclamation pipe 87 in the direction E to the nozzle 88, where it is distributed over a location where land is to be reclaimed.

The above description is included to illustrate the operation of preferred embodiments of the invention and not to limit the scope of the invention. Starting from the above explanation many variations that fall within the scope of the present invention will be evident to an expert.

## Claims

1. Method for reclaiming land at a location of land reclamation using a supply vessel (7), a transport vessel (1) and a delivery vessel (8), wherein the transport vessel is provided with a hull (11) and at least a hopper (25) situated within the hull for containing dredged material, wherein the at least one hopper is provided with a chute (27) extending through the bottom of the hull, wherein the transport vessel is provided with a valve assembly (3) having a movable valve (33), wherein in a first position the valve closes off the chute and in a second position it at least partially ends the closure of the chute as a result of which the hopper is in fluid connection with the water in which the transport vessel is floating, wherein the method comprises by means of the supply vessel (7) reclaiming dredged material from a submarine seabed, from the supply vessel transferring the dredged material to the at least one hopper (25) of the transport vessel (1), by means of the transport vessel transporting the dredged material stored in the hopper to a location of land reclamation situated further away, wherein at the location of land reclamation the transport vessel is placed over a part of the seabed that is designated or adapted to be a depot (92), bringing the valve (33) from the first position into the second position for via the chute (27) dumping the dredged material in the depot (92), by means of the delivery vessel (8) reclaiming the dumped dredged material from the submarine depot (92) and transporting the dredged material therewith to the land (94) to be reclaimed.

2. Method according to claim 1, wherein the transport vessel (1) is provided with a supporting structure placed over or in the hopper (25), wherein the valve assembly (3) is connected to the supporting structure, wherein the valve assembly comprises a valve stem (32) extending from the supporting structure through the hopper, wherein the movable valve (33) is arranged at the outer end of the valve stem.

3. Method according to claim 1 or 2, wherein the hopper (25) or the collective hoppers of the transport vessel (1) have a capacity of at least fifty thousand cubic metres.

4. Method according to any one of the preceding claims, wherein the supply vessel (7) is provided with a loading space (77) for dredged material, wherein the loading space of the supply vessel is two to eight times smaller than the hopper or the collective hoppers of the transport vessel (1).

5. Method according to any one of the claims 1-3, wherein the supply vessel (7) is provided with a loading space (77) for dredged material, wherein the method comprises filling the loading space of the supply vessel with dredged material and by means of the supply vessel transporting the dredged material stored in the loading space to a location of land reclamation that is situated further away.

6. Method according to any one of the preceding claims, wherein the method comprises during the transfer of the dredged material from the supply vessel (7) to the transport vessel (1) having the supply vessel and the transport vessel sail together at a mutual intermediate distance that remains substantially the same.

7. Method according to any one of the claims 2-6, wherein the valve stem (32) is provided with a circumferential wall and outwardly oriented nozzles (35-40) distributed all around the circumferential wall, wherein the transport vessel is provided with a water pump (5) and a water distribution pipe assembly (51), wherein the water distribution pipe assembly is in fluid connection with the nozzles, wherein the method comprises pumping water through the water distribution pipe assembly using the water pump and spraying water through the nozzles into the hopper.

8. Method according to claim 7, wherein the valve stem (32) is hollow, wherein the water distribution pipe assembly (51) is in fluid connection with the nozzles (35-40) via the hollow valve stem.

9. Method according to claim 7 or 8, wherein the valve stem (32) is provided with spouts (38) that are curved downwards in the direction of the valve (33), wherein at their outer ends the spouts are provided with at least a few of the nozzles that are oriented downwards in the direction of the valve, wherein the method comprises spraying water through the nozzles at the outer end of the spouts in the direction of the valve.

10. Transport vessel (1) for transporting dredged material reclaimed from a seabed, wherein the transport vessel is provided with a hull (11) and a hopper (25) situated within the hull for containing dredged material, wherein the hopper is provided with a chute (27) extending through the bottom of the hopper and the bottom of the hull, wherein the transport vessel is provided with a supporting structure placed over or in the hopper and a valve assembly (3) connected to the supporting structure, wherein the valve assembly comprises a valve stem (32) extending from the supporting structure through the hopper and a valve (33) placed at the outer end of the valve stem, wherein in a first position the valve closes off the chute and in a second position it at least partially ends the closure of the chute as a result of which the hopper is in fluid connection with the water in which the transport vessel is floating, **characterized in that** the valve stem (32) is provided with a circumferential wall and outwardly oriented nozzles (35-40) distributed all around the circumferential wall, wherein the transport vessel is provided with a water pump (5) and a water distribution pipe assembly (51), wherein the water distribution pipe assembly is in fluid connection with the nozzles.

11. Transport vessel (1) according to claim 10, wherein the valve stem (32) is hollow, wherein the water distribution pipe assembly (51) is in fluid connection with the nozzles (35-40) via the hollow valve stem.

12. Transport vessel (1) according to claim 10 or 11, wherein the valve stem (32) is provided with spouts (38) curved downwards in the direction of the valve, wherein at their outer ends the spouts are provided with at least a few of the nozzles that are oriented downwards in the direction of the valve.

13. Transport vessel (1) according to any one of the claims 10-12, wherein the transport vessel is provided with two adjacent rows of per row at least four consecutive hoppers (25), wherein the consecutive hoppers are separated from one another by walls (23, 24), wherein the walls are provided with overflow openings.

14. Transport vessel (1) according to any one of the claims 10-13, provided with at least an overflow placed in the hopper (25) or the collective hoppers, for extracting water that was passed along with the dredged material.

## Patentansprüche

1. Verfahren zur Landgewinnung an einer Landgewinnungsörtlichkeit unter Verwendung eines Versorgungsschiffs (7), eines Transportschiffs (1) und eines Ausbringschiffs (8), wobei das Transportschiff mit einem Rumpf (11) und mindestens einem Trichterbehälter (25) versehen ist, welcher zur Aufnahme von Baggergut in dem Rumpf angeordnet ist, wobei der mindestens eine Trichterbehälter mit einem Schacht (27) versehen ist, der sich durch den Boden des Rumpfs erstreckt, wobei das Transportschiff mit einer Ventilanordnung (3) versehen ist, die ein bewegbares Ventil (33) aufweist, wobei das Ventil in einer ersten Position den Schacht schließt und in einer zweiten Position das Schließen des Schachts zumindest teilweise beendet, wodurch der Trichterbehälter in Fluidverbindung mit dem Wasser ist, in welchem das Transportschiff treibt, wobei das Verfahren aufweist: Gewinnen von Baggergut von dem Meeresboden mittels des Versorgungsschiffs (7), Übergeben des Baggerguts von dem Versorgungsschiff an den mindestens einen Trichterbehälter (25) des Transportschiffs (1), Transportieren des in dem Trichterbehälter gelagerten Baggerguts mittels des Transportschiffs zu einer entfernt gelegenen Landgewinnungsörtlichkeit, wobei das Transportschiff an der Landgewinnungsörtlichkeit über einem Teil des Meeresbodens positioniert wird, der als Depot (92) ausgewiesen oder geeignet ist, Verbringen des Ventils (33) aus der ersten Position in die zweite Position, um das Baggergut über den Schacht (27) in das Depot (92) abzuladen, Aufnehmen des abgeladenen Baggerguts aus dem Unterwasserdepot (92) mittels des Ausbringschiffs (8) und Transportieren des Baggerguts mit demselben zu dem zu gewinnenden Land (94).

2. Verfahren nach Anspruch 1, bei welchem das Transportschiff (1) mit einer Stützstruktur versehen ist, welche über oder in dem Trichterbehälter (25) angeordnet ist, wobei die Ventilanordnung (3) mit der Stützstruktur verbunden ist, wobei die Ventilanordnung einen Ventilschaft (32) aufweist, der sich von der Stützstruktur durch den Trichterbehälter erstreckt, wobei das bewegbare Ventil (33) am äußeren Ende des Ventilschafts angeordnet ist.

3. Verfahren nach Anspruch 1 oder 2, bei welchem der Trichterbehälter (25) oder die Gesamtheit der Trichterbehälter des Transportschiffs (1) eine Kapazität von wenigstens fünfzigtausend Kubikmetern aufweisen.

4. Verfahren nach einem der vorhergehenden Ansprüche, bei welchem das Versorgungsschiff (7) mit einem Laderaum (77) für Baggergut versehen ist, wobei der Laderaum des Versorgungsschiffs zwei bis acht Mal kleiner als der Trichterbehälter oder die Gesamtheit der Trichterbehälter des Transportschiffs (1) ist.

5. Verfahren nach einem der Ansprüche 1-3, bei welchem das Versorgungsschiff (7) mit einem Laderaum (77) für Baggergut versehen ist, wobei das Verfahren das Füllen des Laderaums des Versorgungsschiffs mit Baggergut und das Transportieren des in dem Laderaum gelagerten Baggerguts mittels des Versorgungsschiffs zu einer entfernt gelegenen Landgewinnungsörtlichkeit aufweist.

6. Verfahren nach einem der vorhergehenden Ansprüche, bei welchem das Verfahren den Schritt aufweist, dass, während des Übergebens des Baggerguts von dem Versorgungsschiff (7) an das Transportschiff (1), das Versorgungsschiff und das Transportschiff in einem gegenseitigem mittleren Abstand voneinander fahren, der im Wesentlichen gleich bleibt.

7. Verfahren nach einem der Ansprüche 2-6, bei welchem der Ventilschaft (32) mit einer Umfangswand und nach außen gerichteten Düsen (35-40) versehen ist, die um die gesamte Umfangswand verteilt sind, wobei das Transportschiff mit einer Wasserpumpe (5) und einer Wasserverteilungsrohranordnung (51) versehen ist, wobei die Wasserverteilungsrohranordnung in Fluidverbindung mit den Düsen steht, wobei das Verfahren das Pumpen von Wasser durch die Wasserverteilungsrohranordnung unter Verwendung der Wasserpumpe und das Sprühen von Wasser durch die Düsen in den Trichterbehälter aufweist.

8. Verfahren nach Anspruch 7, bei welchem der Ventilschaft (32) hohl ist, wobei die Wasserverteilungsrohranordnung (51) über den hohlen Ventilschaft in Fluidverbindung mit den Düsen (35-40) steht.

9. Verfahren nach Anspruch 7 oder 8, bei welchem der Ventilschaft (32) mit Auslässen (38) versehen ist, die nach unten in Richtung des Ventils (33) gebogen sind, wobei die Auslässe an ihren äußeren Enden mit mindestens einigen der Düsen versehen sind, die nach unten in Richtung des Ventils gerichtet sind, wobei das Verfahren das Sprühen von Wasser durch die Düsen an den äußeren Enden der Auslässe in Richtung des Ventils aufweist.

10. Transportschiff (1) zum Transportieren von vom Meeresboden gewonnenem Baggergut, wobei das Transportschiff (1) mit einem Rumpf (11) und einem Trichterbehälter (25) versehen ist, der zur Aufnahme von Baggergut in dem Rumpf angeordnet ist, wobei der Trichterbehälter mit einem Schacht (27) versehen ist, der sich durch den Boden des Trichterbehälters und den Boden des Rumpfs erstreckt, wobei das Transportschiff mit einer Stützstruktur, die über oder in dem Trichterbehälter positioniert ist, und einer mit der Stützstruktur verbundenen Ventilanordnung (3) versehen ist, wobei die Ventilanordnung einen Ventilschaft (32), welcher sich von der Stützstruktur durch den Trichterbehälter erstreckt, und ein am äußeren Ende des Ventilschafts angeordnetes Ventil (33) aufweist, wobei das Ventil in einer ersten Position den Schacht schließt und in einer zweiten Position das Schließen des Schachts zumindest teilweise beendet, wodurch der Trichterbehälter in Fluidverbindung mit dem Wasser steht, in dem das Transportschiff treibt, **dadurch gekennzeichnet, dass** der Ventilschaft (32) mit einer Umfangswand und nach außen gerichteten Düsen (35-40) versehen ist, die um die gesamte Umfangswand verteilt sind, wobei das Transportschiff mit einer Wasserpumpe (5) und einer Wasserverteilungsrohranordnung (51) versehen ist, wobei die Wasserverteilungsrohranordnung in Fluidverbindung mit den Düsen steht.

11. Transportschiff (1) nach Anspruch 10, bei welchem der Ventilschaft (32) hohl ist, wobei die Wasserverteilungsrohranordnung (51) über den hohlen Ventilschaft in Fluidverbindung mit den Düsen (35-40) steht.

12. Transportschiff (1) nach Anspruch 10 oder 11, bei welchem der Ventilschaft (32) mit Auslässen (38) versehen ist, die nach unten in Richtung des Ventils gebogen sind, wobei die Auslässe an ihren äußeren Enden mit mindestens einigen der Düsen versehen sind, die nach unten in Richtung des Ventils gerichtet sind.

13. Transportschiff (1) nach einem der Ansprüche 10-12, bei welchem das Transportschiff mit zwei benachbarten Reihen von mindestens vier aufeinanderfolgenden Trichterbehältern (25) pro Reihe versehen ist, wobei die aufeinanderfolgenden Trichterbehälter voneinander durch Wände (23, 24) getrennt sind, wobei die Wände mit Überlauföffnungen versehen sind.

14. Transportschiff (1) nach einem der Ansprüche 10-13, das mit mindestens einem in dem Trichterbehälter oder der Gesamtheit der Trichterbehälter angeordneten Überlauf versehen ist, um mit dem Baggergut übergebenes Wasser abzuführen.

## Revendications

1. Procédé de remblaiement de terrain sur un lieu de remblaiement de terrain à l'aide d'un navire ravitailleur (7), d'un navire de transport (1) et d'un navire de distribution (8), dans lequel le navire de transport est pourvu d'une coque (11) et d'au moins une trémie (25) située dans la coque pour contenir le matériau dragué, dans lequel la ou les trémies sont pourvues d'une goulotte (27) traversant le fond de la coque, dans lequel le navire de transport est pourvu d'un ensemble clapet (3) possédant un clapet mobile (33), dans lequel, dans une première position, le clapet ferme la goulotte et, dans une seconde position, il met fin au moins partiellement à la fermeture de la goulotte, à la suite de quoi la trémie se trouve en raccordement fluidique avec l'eau dans laquelle flotte le navire de transport, dans lequel le procédé consiste, à l'aide du navire ravitailleur (7), à récupérer le matériau dragué depuis un fond sous-marin, depuis le navire ravitailleur à transférer le matériau dragué vers au moins une trémie (25) du navire de transport (1), à l'aide du navire de transport à transporter le matériau dragué stocké dans la trémie vers un lieu remblaiement de terrain situé plus loin, dans lequel, sur le lieu de remblaiement de terrain, le navire de transport est placé sur une partie du fond marin qui est destinée ou conçue pour être un dépôt (92), à amener le clapet (33) de la première position jusque dans la seconde position pour décharger, par le biais de la goulotte (27), le matériau dragué dans le dépôt (92), à l'aide du navire ravitailleur (8) à récupérer le matériau dragué déchargé depuis le dépôt sous-marin (92) et à transporter le matériau dragué avec celui-ci jusqu'au terrain (94) à remblayer.

2. Procédé selon la revendication 1, dans lequel le navire de transport (1) est pourvu d'une structure de soutien placée sur ou dans la trémie (25), dans lequel l'ensemble clapet (3) est raccordé à la structure de soutien, dans lequel l'ensemble clapet comprend une tige (32) de clapet s'étendant depuis la structure de soutien à travers la trémie, dans lequel le clapet mobile (33) est agencé au niveau de l'extrémité extérieure de la tige de clapet.

3. Procédé selon la revendication 1 ou 2, dans lequel la trémie (25) ou les trémies collectives du navire de transport (1) ont une capacité d'au moins cinquante mille mètres cubes.

4. Procédé selon l'une quelconque des revendications précédentes, dans lequel le navire ravitailleur (7) est pourvu d'un espace de chargement (77) pour matériau dragué, dans lequel l'espace de chargement du navire ravitailleur est de deux à huit fois plus petit que la trémie ou les trémies collectives du navire de transport (1).

5. Procédé selon l'une quelconque des revendications 1-3, dans lequel le navire ravitailleur (7) est pourvu d'un espace de chargement (77) pour matériau dragué, dans lequel le procédé consiste à remplir l'espace de chargement du navire ravitailleur avec le matériau dragué et, à l'aide du navire ravitailleur, à transporter le matériau dragué stocké dans l'espace de stockage jusqu'à un lieu de remblaiement de terrain qui se situe plus loin.

6. Procédé selon l'une quelconque des revendications précédentes, dans lequel le procédé consiste, lors du transfert du matériau dragué depuis le navire ravitailleur (7) vers le navire de transport (1), à ce que le navire ravitailleur et le navire de transport naviguent ensemble à une distance intermédiaire mutuelle qui reste sensiblement la même.

7. Procédé selon l'une quelconque des revendications 2-6, dans lequel la tige (32) de clapet est pourvue d'une paroi circonférentielle et de buses (35-40) orientées vers l'extérieur réparties tout autour de la paroi circonférentielle, dans lequel le navire de transport est pourvu d'une pompe à eau (5) et d'un ensemble tuyau de distribution d'eau (51), dans lequel l'ensemble tuyau de distribution d'eau est en raccordement fluidique avec les buses, dans lequel le procédé consiste à pomper l'eau par l'ensemble tuyau de distribution d'eau à l'aide de la pompe à eau et à pulvériser l'eau par les buses jusque dans la trémie.

8. Procédé selon la revendication 7, dans lequel la tige (32) de clapet est creuse, dans lequel l'ensemble tuyau de distribution d'eau (51) est en raccordement fluidique avec les buses (35-40) par le biais de la tige de clapet creuse.

9. Procédé selon la revendication 7 ou 8, dans lequel la tige (32) de clapet est pourvue de déversoirs (38) qui s'incurvent vers le bas dans la direction du clapet (33), dans lequel, à leurs extrémités extérieures, les déversoirs sont pourvus d'au moins quelques-unes des buses qui sont orientées vers le bas dans la direction du clapet, dans lequel le procédé consiste à pulvériser l'eau par les buses à l'extrémité extérieure des déversoirs dans la direction du clapet.

10. Navire de transport (1) destiné à transporter un matériau dragué récupéré d'un fond marin, dans lequel le navire de transport est pourvu d'une coque (11) et d'une trémie (25) située dans la coque pour contenir le matériau dragué, dans lequel la trémie est pourvue d'une goulotte (27) traversant le fond de la trémie et le fond de la coque, dans lequel le navire de transport est pourvu d'une structure de soutien placée sur ou dans la trémie et d'un ensemble clapet (3) raccordé à la structure de soutien, dans lequel l'ensemble clapet comprend une tige (32) de clapet s'étendant depuis la structure de soutien à travers la trémie et un clapet (33) placé à l'extrémité extérieure de la tige de clapet, dans lequel, dans une première position, le clapet ferme la goulotte et, dans une seconde position, il met fin au moins partiellement à la fermeture de la goulotte, à la suite de quoi la trémie se trouve en raccordement fluidique avec l'eau dans laquelle flotte le navire de transport, **caractérisé en ce que** la tige (32) de clapet est pourvue d'une paroi circonférentielle et de buses (35-40) orientées vers l'extérieur réparties tout autour de la paroi circonférentielle, dans lequel le navire de transport est pourvu d'une pompe à eau (5) et d'un ensemble tuyau de distribution d'eau (51), l'ensemble tuyau de distribution d'eau étant en raccordement fluidique avec les buses.

11. Navire de transport (1) selon la revendication 10, dans lequel la tige (32) de clapet est creuse, dans lequel l'ensemble tuyau de distribution d'eau (51) est en raccordement fluidique avec les buses (35-40) par le biais de la tige de clapet creuse.

12. Navire de transport (1) selon la revendication 10 ou 11, dans lequel la tige (32) de clapet est pourvue de déversoirs (38) incurvés vers le bas dans la direction du clapet, dans lequel, à leurs extrémités extérieures, les déversoirs sont pourvus d'au moins quelques-unes des buses qui sont orientées vers le bas dans la direction du clapet.

13. Navire de transport (1) selon l'une quelconque des revendications 10-12, dans lequel le navire de transport est pourvu de deux rangées adjacentes d'au moins quatre trémies (25) consécutives par rangée, dans lequel les trémies consécutives sont séparées les unes des autres par des parois (23, 24), dans lequel les parois sont pourvues d'ouvertures de trop-plein.

14. Navire de transport (1) selon l'une quelconque des revendications 10-13, pourvu d'au moins un trop-plein placé dans la trémie (25) ou les trémies collectives, pour extraire l'eau qui est passée avec le matériau dragué.
